# EUROPEAN PATENT APPLICATION

(11) **EP 4 422 304 A1**
(43) Date of publication of application: **28.08.2024**
(21) Application number: 21961002.9
(22) Date of filing: 21.10.2021
(51) Int. Cl.: H04W 68/02, H04W 52/02

(54) **PACKET PAGING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2021/125431
(87) International publication number: WO 2023/065253

(57) **Abstract**

Embodiments of the present disclosure provide a packet paging method. The method is executed by a base station. The method comprises: issuing a paging early indication (PEI), the PEI comprising at least one of a first type of PEI and a second type of PEI, the first type of PEI is a PEI not indicating a sub-paging packet, and the second type of PEI is a PEI indicating a sub-paging packet.

## Description

### TECHNICAL FIELD

The present disclosure relates to, but is not limited to, a field of wireless communication technologies, and particularly to a method and an apparatus for group paging, a communication device and a storage medium.

### BACKGROUND

Paging may achieve an important function of wireless communication. Paging involves a base station notifying a paged terminal to respond to a network according to a network requirement. The base station and the terminal may agree on a paging occasion (PO), and the base station may send a paging message at the PO, and the terminal may receive the paging message at a corresponding PO.

In related arts, the terminal is paged by means of group paging, and the network may page all terminals in one group by sending one paging message, without necessarily sending the paging message separately for each terminal. The terminal determines whether the terminal itself belongs to a paged group after receiving a group paging message, and if so, the terminal responds to the group paging message, and if not, the terminal ignores the group paging message.

### SUMMARY

Embodiments of the present disclosure relate to a field of wireless communication technologies, and particularly to a method and an apparatus for group paging, a communication device and a storage medium.

According to a first aspect of embodiments of the disclosure, a method for group paging is provided, and performed by a base station. The method includes:
sending a paging early indication (PEI),
in which the PEI includes at least one of a first type of PEI or a second type of PEI, the first type of PEI is a PEI without indicating a paging sub-group; and the second type of PEI is a PEI indicating a paging sub-group.

In an embodiment, the first type of PEI and the second type of PEI are not multiplexed.

In an embodiment, the first type of PEI and the second type of PEI are carried by different downlink control information (DCI).

In an embodiment,
a paging-radio network temporary identifier (P-RNTI) of the first type of PEI is different from a P-RNTI of the second type of PEI;
   and/or,
a common search space of the first type of PEI is different from a common search space of the second type of PEI;
   and/or,
a control resource set (Coreset) of the first type of PEI is different from a Coreset of the second type of PEI;
   and/or,
a format of the first type of PEI is different from a format of the second type of PEI.

In an embodiment, the first type of PEI and the second type of PEI are multiplexed.

In an embodiment, the first type of PEI and the second type of PEI are carried by same downlink control information (DCI).

In an embodiment, the DCI includes a predetermined information field, the predetermined information field includes a first subfield and/or a second subfield, the first subfield indicates information of the first type of PEI, and the second subfield indicates information of the second type of PEI.

In an embodiment, the DCI includes a predetermined information field, a value of the predetermined information field is configured to indicate that a PEI carried by the DCI is the first type of PEI, or, a PEI carried by the DCI is the second type of PEI.

In an embodiment, the method further includes:
sending a system message, in which the system message is at least configured to indicate that the PEI is the first type of PEI or the second type of PEI.

In an embodiment, the method further includes:
receiving capability information supporting the first type of PEI sent by the terminal;
   and/or,
receiving capability information of whether to support the second type of PEI sent by the terminal.

According to a second aspect of embodiments of the disclosure, a method for group paging is provided, and performed by a terminal. The method includes:
receiving a paging early indication (PEI);
in which the PEI includes at least one of a first type of PEI or a second type of PEI, the first type of PEI is a PEI without indicating a paging sub-group, and the second type of PEI is a PEI indicating the paging sub-group.

In an embodiment, the first type of PEI and the second type of PEI are not multiplexed.

In an embodiment, the first type of PEI and the second type of PEI are carried by different downlink control information (DCI).

In an embodiment,
a paging-radio network temporary identifier (P-RNTI) of the first type of PEI is different from a P-RNTI of the second type of PEI;
   and/or,
a common search space of the first type of PEI is different from a common search space of the second type of PEI;
   and/or,
a control resource set (Coreset) of the first type of PEI is different from a Coreset of the second type of PEI;
   and/or,
a format of the first type of PEI is different from a format of the second type of PEI.

In an embodiment, the first type of PEI and the second type of PEI are multiplexed.

In an embodiment, the first type of PEI and the second type of PEI are carried by same downlink control information (DCI).

In an embodiment, the DCI includes a predetermined information field, the predetermined information field includes a first subfield and/or a second subfield, the first subfield indicates information of the first type of PEI, and the second subfield indicates information of the second type of PEI.

In an embodiment, the DCI includes a predetermined information field, a value of the predetermined information field is configured to indicate that a PEI carried by the DCI is the first type of PEI, or, a PEI carried by the DCI is the second type of PEI.

In an embodiment, the method further includes:
receiving a system message, in which the system message is at least configured to indicate that the PEI is the first type of PEI or the second type of PEI.

In an embodiment, the method further includes:
in response to the PEI being the first type of PEI, performing, by a terminal supporting the first type of PEI, a paging operation based on the first type of PEI;
   and/or,
in response to the PEI being the second type of PEI, performing, by a terminal supporting the second type of PEI, a paging operation based on the second type of PEI;
   and/or,
in response to the PEI being the first type of PEI, performing, by a terminal supporting the second type of PEI, a paging operation based on the first type of PEI;
   and/or,
in response to the PEI being the second type of PEI, performing, by a terminal supporting the first type of PEI, a paging operation based on the second type of PEI.

In an embodiment, the method further includes:
reporting capability information that the terminal supports the first type of PEI;
   and/or,
reporting capability information of whether the terminal supports the second type of PEI.

According to a third aspect of embodiments of the present disclosure, an apparatus for group paging is provided. The apparatus includes:
a sending module, configured to send a paging early indication (PEI);
in which the PEI includes at least one of a first type of PEI or a second type of PEI, the first type of PEI is a PEI without indicating a paging sub-group, and the second type of PEI is a PEI indicating the paging sub-group.

According to a fourth aspect of embodiments of the present disclosure, an apparatus for group paging is provided. The apparatus includes:
a receiving module, configured to receive a paging early indication (PEI);
in which the PEI includes at least one of a first type of PEI or a second type of PEI, the first type of PEI is a PEI without indicating a paging sub-group, and the second type of PEI is a PEI indicating the paging sub-group.

According to a fifth aspect of embodiments of the present disclosure, a communication device is provided. The communication device includes:
a processor; and
a memory for storing instructions executable by the processor;
in which the processor is configured to implement the method as described in the above any embodiment when running the executable instructions.

According to a sixth aspect of embodiments of the present disclosure, a computer storage medium storing a computer executable program is provided. When the executable program is executed by a processor, the method as described in the above any embodiment is implemented.

In embodiments of the present disclosure, the paging early indication (PEI) is sent, in which the PEI includes at least one of the first type of PEI or the second type of PEI, the first type of PEI is the PEI without indicating the paging sub-group, and the second type of PEI is the PEI indicating the paging sub-group. Since the base station may send both the first type of PEI and the second type of PEI, regardless of whether the terminal receiving the PEI is capable of identifying a PEI indicating the paging sub-group, the terminal may receive the PEI that may be identified by the terminal. Compared with a manner in which the base station only sends the second type of PEI, the present disclosure may send two different types of PEIs to adapt to a capability of the terminal, therefore, a network compatibility may be improved.

### BRIEF DESCRIPTION OF THE DRAWINGS

FIG. 1 is a structural diagram illustrating a wireless communication system according to an example embodiment.
FIG. 2 is a diagram illustrating a DCI format according to an example embodiment.
FIG. 3 is a flowchart illustrating a method for group paging according to an example embodiment.
FIG. 4 is a flowchart illustrating a method for group paging according to an example embodiment.
FIG. 5 is a flowchart illustrating a method for group paging according to an example embodiment.
FIG. 6 is a flowchart illustrating a method for group paging according to an example embodiment.
FIG. 7 is a flowchart illustrating a method for group paging according to an example embodiment.
FIG. 8 is a flowchart illustrating a method for group paging according to an example embodiment.
FIG. 9 is a flowchart illustrating a method for group paging according to an example embodiment.
FIG. 10 is a diagram illustrating an apparatus for group paging according to an example embodiment.
FIG. 11 is a diagram illustrating an apparatus for group paging according to an example embodiment.
FIG. 12 is a structural diagram illustrating a terminal according to an example embodiment.
FIG. 13 is a block diagram illustrating a base station according to an example embodiment.

### DETAILED DESCRIPTION

The example embodiments will be described here, and examples thereof are shown in attached drawings. When the following descriptions refer to the accompanying drawings, same numbers in different drawings represent same or similar elements unless otherwise indicated. The implementations described in the following exemplary embodiments do not represent all implementations consistent with embodiments of the present disclosure. Rather, they are merely examples of apparatuses and methods consistent with some aspects of the disclosure as detailed in the appended claims.

The terms described in the embodiments of the present disclosure are only for the purpose of describing specific embodiments and are not intended to limit the embodiments of the present disclosure. The singular forms "a", "the" used in the embodiments of the disclosure and the appended claim are also intended to include plural forms, unless the context clearly indicates otherwise. It should also be understood that the term "and/or" used in the present disclosure means and includes any or all possible combinations of one or more associated listed items.

It should be understood that, although the terms first, second, third, etc. may be used in embodiments of the present disclosure to describe various information, such information shall not be limited to these terms. These terms are only used to distinguish the same category of information. For example, subject to the scope of embodiments of the present disclosure, first information may also be referred to as second information, and similarly, second information may also be referred to as first information. It depends on the context. For example, the word "if" as used herein may be interpreted as "in a case that" or "when" or "in response to determining".

The terms used herein are "greater than" or "less than" when representing a size relationship for purposes of conciseness and ease of understanding. However, it is understandable for those skilled in the art that the term "greater than" covers the meaning of "greater than or equal to", and "less than" covers the meaning of "less than or equal to".

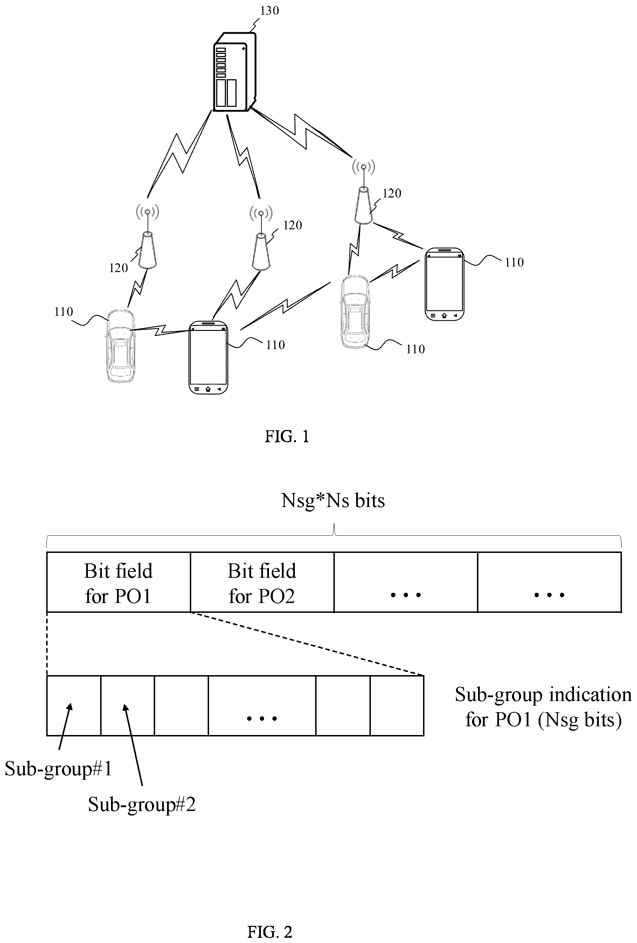

FIG. 1 is a structural diagram illustrating a wireless communication system according to embodiments of the present disclosure. As illustrated in FIG. 1, the wireless communication system is a communication system based on a mobile communication technology. The wireless communication system may include several user equipments (UEs) 110 and several base stations 120.

The UE 110 may refer to a device that provides voice and/or data connectivity for a user. The UE 110 may communicate with one or more core networks via a radio access network (RAN), which may be an internet of things user equipment, for example, a sensor device, a mobile phone and a computer having an internet of things user equipment, for example, may be a fixed, portable, compact, handheld, computer built-in or vehicle apparatus. For example, a station (STA), a subscriber unit, a subscriber station, a mobile station, a mobile, a remote station, an access point, a remote terminal, an access terminal, an access terminal, a user terminal, a user agent, a user device or a user equipment (UE). Alternatively, the UE 110 may be a device of an unmanned vehicle. Alternatively, the UE 110 may be a vehicle device, and for example, may be a vehicle computer with a wireless communication function, or a wireless user equipment externally connected to a vehicle computer. Alternatively, the user equipment 110 also may be a roadside device, and for example, may be a street lamp, a signal lamp or other roadside device with a wireless communication function.

The base station 120 may be a network side device in a wireless communication system. The wireless communication system may be a fourth generation (4G) mobile communication system, also referred to as a long term evolution (LTE) system; or the wireless communications system may be a 5G system, also referred to as a new radio (NR) system or a 5G NR system. Alternatively, the wireless communication system also may be a next generation system of a 5G system. An access network in a 5G system may be referred to as a new generation-radio access network (NG-RAN).

The base station 120 may be an eNB adopted in a 4G system. Alternatively, the base station 120 may be a base station with a centralized distributed architecture (gNB) in a 5G system. When the base station 120 adopts a centralized distributed architecture, it generally includes a central unit (CU) and at least two distributed units (DU). Protocol stacks at a Packet Data Convergence Protocol (PDCP) layer, a Radio Link Control (RLC) layer and a Media Access Control (MAC) layer are configured in a CU; a physical (PHY) layer protocol is configured in a DU. The specific implementation of a base station 120 is not limited in embodiments of the disclosure.

The base station 120 may establish a wireless connection with the UE 110 through a radio interface. In different implementations, the radio interface is a radio interface based on a 4G standard; or, the radio interface is a radio interface based on a 5G standard, and for example, the radio interface is a new radio interface; or, the radio interface may be a radio interface based on a next generation mobile communication network technology standard of a 5G.

In some embodiments, an end to end (E2E) connection further may be established between UEs 110. For example, it is applicable to scenarios such as vehicle to vehicle (V2V) communication, vehicle to infrastructure (V2I) communication and vehicle to pedestrian (V2P) communication in vehicle to everything (V2X).

The above UEs may be referred to as terminal devices in the following embodiments.

In some embodiments, the wireless communication system may further include a network management device 130.

Several base stations 12 are respectively connected to the network management device 130. The network management device 130 may be a core network device in a wireless communication system, and for example, the network management device 130 may be a mobility management entity (MME) in an evolved packet core (EPC). Alternatively, the network management device may be other core network devices, and for example, a Serving GateWay (SGW), a Public Data Network GateWay (PGW), a Policy and Charging Rules Function (PCRF) or a Home Subscriber Server (HSS), etc. The implementation form of the network management device 130 is not limited in embodiments of the disclosure.

For convenience of understanding by those skilled in the art, the technical solution in embodiments of the present disclosure is described clearly in combination with attached drawings in embodiments of the present disclosure. Those skilled in the art may understand that, a plurality of embodiments provided in embodiments of the disclosure may be executed independently or executed in combination with the method in other embodiments of the disclosure, or may be executed independently or executed with some methods in the other related art after combination, which are not be limited in embodiments of the disclosure.

In order to understand the technical solution as described in any one embodiment of the disclosure better, a scenario where group paging is performed on terminals in related art is illustrated.

In an embodiment, in a case that paging is not grouped, all terminals may be awakened at a paging occasion (PO). In an embodiment, since probabilities of terminals being paged within a time period corresponding to the PO are different, a terminal with a low paging probability may be wrongly awakened, resulting in an unnecessary power consumption. Therefore, it is required to perform group paging on the terminals, and the terminals are paged by means of the group paging.

In an embodiment, group information of the paging may be carried in paging downlink control information (DCI) or may be carried in a paging early indication (PEI). Regardless of which grouping manner, both the terminal and the network (including a base station and a core network) are required to agree on a group where the terminal is located so that a paging message may be sent to the terminal normally.

In an embodiment, a paging probability Pnas is predetermined between the terminal and the core network, and the base station broadcasts information including a relationship between the probability and the paging group. Therefore, the terminal may determine the paging group where the terminal is located based on received information.

In an embodiment, the core network may notify the base station of the paging probability of the terminal in response to the core network device sending the paging message to the base station, to facilitate the base station to determine the paging group of the terminal. In an embodiment, in a case that the core network does not notify the base station of the paging probability of the terminal, the terminal may select a predetermined paging group.

In an embodiment, the paging probability Pnas is pre-negotiated between the terminal and the core network, and the base station broadcasts a relationship between the Pnas and the group, therefore, the terminal may determine the paging group. The core network may notify the base station of the Pnas of the terminal for determining grouping of the terminal by the base station when the paging message arrives at the base station from the core network. In this case, consistency of grouping acknowledgment is reached between three network elements of the terminal, the base station and the core network.

In an embodiment, FIG. 2 illustrates how the PEI indicates group information for a DCI format of a PEI for indicating a paging sub-group. The PEI may be associated with a plurality of POs, and Nsg bits are required for each PO to indicate the group information of the paging.

However, some terminals may only support a capability of a PEI without indicating the paging group, and does not support a capability of a PEI indicating the paging sub-group. Therefore, it is required to consider how to design a condition of not supporting indicating the paging sub-group and a behavior of the terminal.

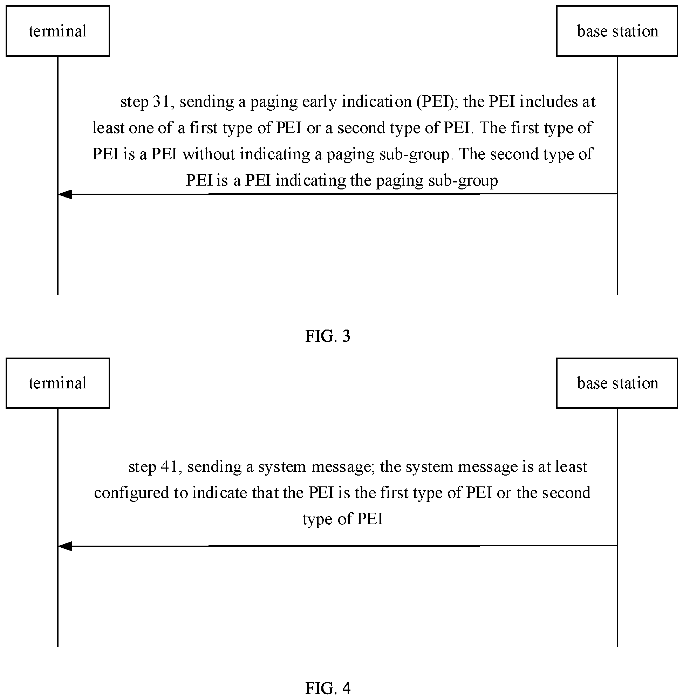

As illustrated in FIG. 3, a method for group paging is provided in the embodiment. The method is performed by a base station, and includes a following step.

At step 31, a paging early indication (PEI) is sent.

The PEI includes at least one of a first type of PEI or a second type of PEI. The first type of PEI is a PEI without indicating a paging sub-group. The second type of PEI is a PEI indicating the paging sub-group.

The terminal may be but is not limited to a mobile phone, a wearable device, a vehicle terminal, a road side unit (RSU), a smart home terminal, an industrial sensing device and/or a medical device, etc.

In an application scenario, the terminal may be a terminal supporting the second type of PEI, and the terminal supporting the second type of PEI may be capable of identifying the second type of PEI and/or performing a paging operation based on the second type of PEI after receiving the PEI. In an application scenario, the terminal may be a terminal not supporting the second type of PEI, and the terminal not supporting the second type of PEI may be incapable of identifying the second type of PEI and/or performing the paging operation based on the second type of PEI after receiving the PEI. In some application scenarios, in a terminal accessed in the network, part of terminals are terminals supporting the second type of PEI, and another part of terminals are terminals without supporting the second type of PEI, which is not limited herein. It needs to be noted that, in response to the terminal supporting the second type of PEI, the terminal supports the first type of PEI. A scenario of whether the terminal supports the first type of PEI is similar to the above scenario. It needs to be noted that, the terminal may not support the first type of PEI and the second type of PEI simultaneously.

The base station involved in the present disclosure may be an access device that the terminal accesses the network. The base station may be various types of base stations such as a 3G network base station, a 4G network base station, a 5G network base station or other evolutionary base station. The base station may configure different types of PEIs according to capability information of a PEI supported by the terminal.

In an embodiment, the group paging may include dividing terminals into different groups. The network pages all terminals in one group by sending one group paging message, without necessarily sending the paging message independently for each terminal. The terminal determines whether the terminal itself belongs to a paged group after receiving the group paging message, and if so, the terminal responses to the group paging message, and if not, the terminal ignores the group paging message.

In an embodiment, there may be a plurality of groups for the group paging. Different groups may be configured with different paging resources. A terminal may belong to a certain group in the plurality of groups. In response to determining the paging group to which the terminal belongs, the terminal may monitor the paging message on a paging resource indicated by the paging group. Which group the terminal belongs to may be determined by the base station or a certain core network device in the core network. It needs to be noted that, a predetermined group may be divided into a plurality of paging sub-groups. The group may refer to a paging sub-group, which is not limited here.

In an embodiment, there may be a plurality of paging sub-groups for the group paging. A terminal included in the paging sub-group may be determined according to a probability of the terminal being paged and a paging class to which the terminal belongs. In an embodiment, the terminal may determine a paging sub-group to which the terminal belongs according to the probability of the terminal being paged. In an embodiment, in response to the probability of the terminal being paged being less than a probability threshold, it is determined that the terminal belongs to a first paging sub-group, or in response to the probability of the terminal being paged being greater than the probability threshold, it is determined that the terminal belongs to a second paging sub-group. A paging resource configured by the first paging sub-group may be different from a paging resource configured by the second paging sub-group. It needs to be noted that, the paging resource configured by the first paging sub-group may be same as the paging resource configured by the second paging sub-group.

In embodiments of the disclosure, the base station may send two different types of PEIs. The PEI is configured for the terminal to execute a paging operation. The PEI indicating the paging sub-group may be a PEI carrying paging sub-group information.

It needs to be noted that, the terminal may report capability information of the PEI supported by the terminal. The base station may determine which type of PEI is sent to the terminal. For example, the capability information indicates that the terminal only supports the first type of PEI, in which case the base station may send the first type of PEI. Alternatively, the capability information indicates that the terminal supports the first type of PEI and the second type of PEI, in which case the base station may send the second type of PEI or the base station may send the first type of PEI. Alternatively, the capability information indicates that the terminal supports the first type of PEI and the second type of PEI, in which case the base station sends the first type of PEI and the second type of PEI. Which type of PEI is used may be determined by the terminal according to a terminal strategy and/or a terminal capability after the terminal receives the first type of PEI and the second type of PEI. For example, the terminal preferentially uses the second type of PEI according to the terminal strategy, which is not limited here.

In an embodiment, the base station receives the capability information reported by the terminal. The capability information indicates that the terminal supports the first type of PEI. The base station sends the PEI according to the capability information. The PEI includes the first type of PEI. The first type of PEI is a PEI without indicating a paging sub-group. The terminal performs the paging operation based on the first type of PEI after receiving the first type of PEI. Performing the paging operation may be determining whether it is required to response to the paging message sent by the base station.

In an embodiment, the base station receives the capability information reported by the terminal. The capability information indicates that the terminal supports the second type of PEI. The base station sends the PEI according to the capability information. The PEI includes the second type of PEI. The second type of PEI is a PEI indicating the paging sub-group. The terminal performs the paging operation based on the second type of PEI after receiving the second type of PEI. Performing the paging operation may be determining whether it is required to response to the paging message sent by the base station.

In an embodiment, the base station receives the capability information reported by the terminal. The capability information indicates that the terminal supports the second type of PEI. The base station sends the PEI according to the capability information. The PEI includes the first type of PEI. The first type of PEI is the PEI without indicating the paging sub-group. The terminal performs the paging operation based on the first type of PEI after receiving the first type of PEI. Performing the paging operation may be determining whether it is required to response to the paging message sent by the base station. It needs to noted that, in response to the terminal supporting the second type of PEI, the terminal may monitor the first type of PEI.

In an embodiment, the base station receives the capability information reported by the terminal. The capability information indicates that the terminal supports the second type of PEI. The base station sends the PEI according to the capability information. The PEI includes the first type of PEI and the second type of PEI. The first type of PEI is the PEI without indicating the paging sub-group. The second type of PEI is the PEI indicating the paging sub-group. The terminal performs the paging operation based on the first type of PEI or the second type of PEI after receiving the first type of PEI and the second type of PEI. Performing the paging operation may be determining whether it is required to response to the paging message sent by the base station. It needs to be noted that, after the terminal receives two different types of PEIs, which type of PEI the terminal adopts to perform the paging operation may be determined according to a terminal strategy, or may be specified according to a predetermined protocol, or may be a default configuration, which is not limited here.

The paging sub-group may be indicated by information carrying the paging sub-group. It needs to be noted that, types of the PEIs involved in the disclosure may be distinguished and indicated by means of an explicit indication or an implicit indication. Indicating by means of the explicit indication may be that the PEI may be directly indicated by a set dedicated information field. For example, an information field includes 1 bit. When the information field is set to "0", it indicates that the PEI is the first type of PEI. When the information field is set to "1", it indicates that the PEI is the second type of PEI. Indicating by means of the implicit indication may be that the PEI is indicated by different types of paging-radio network temporary identifiers (P-RNTIs), common search spaces, control resource sets (Coresets) and formats of DCIs that send the PEI, without configuring the dedicated information field. For example, in a case that the PEI is scrambled with a first P-RNTI, the PEI is indicated as the first type of PEI, and in a case that the PEI is scrambled with a second P-RNTI, the PEI is indicated as the second type of PEI. In an embodiment, the first type of PEI and the second type of PEI may not be multiplexed in a carrying manner. For example, the first type of PEI and the second type of PEI may be carried by different DCIs, the first type of PEI is carried by the first DCI, and the second type of PEI is carried by the second DCI.

In an embodiment, the first type of PEI and the second type of PEI may be multiplexed in a carrying manner. For example, the first type of PEI and the second type of PEI may be carried by a same DCI. In an embodiment, the first type of PEI and the second type of PEI may not be multiplexed in a carrying manner. For example, the first type of PEI and the second type of PEI may be carried by different DCIs, the first type of PEI is carried by the first DCI, and the second type of PEI is carried by the second DCI.

In embodiments of the disclosure, the paging early indication (PEI) is sent, in which the PEI includes at least one of the first type of PEI or the second type of PEI, the first type of PEI is the PEI without indicating the paging sub-group, and the second type of PEI is the PEI indicating the paging sub-group. Since the base station may send both the first type of PEI and the second type of PEI, regardless of whether the terminal receiving the PEI is capable of identifying a PEI indicating the paging sub-group, the terminal may receive the PEI that may be identified by the terminal. Compared with a manner in which the base station only sends the second type of PEI, the present disclosure may send two different types of PEIs to adapt to a capability of the terminal, therefore, a network compatibility may be improved.

It needs to be noted that, those skilled in the art may understand that, the method provided in embodiments of the disclosure may be executed independently, or may be executed in combination with some methods in embodiments of the disclosure or some methods in the related art.

In an embodiment, the first type of PEI and the second type of PEI are not multiplexed. The first type of PEI and the second type of PEI may be carried by different DCIs. For example, the first type of PEI is carried by the first DCI, and the second type of PEI is carried by the second DCI.

In an embodiment, a paging-radio network temporary identifier (P-RNTI) of the first type of PEI is different from a P-RNTI of the second type of PEI;
and/or,
a common search space of the first type of PEI is different from a common search space of the second type of PEI;
   and/or,
a control resource set (Coreset) of the first type of PEI is different from a Coreset of the second type of PEI;
   and/or,
a format of DCI of the first type of PEI is different from a format of DCI of the second type of PEI.

In an embodiment, the first type of PEI is scrambled with a first P-RNTI, and the second type of PEI is scrambled with a second P-RNTI. The terminal may determine whether the PEI is the first type of PEI or the second type of PEI according to the scrambled P-RNTI after receiving the PEI. For example, the P-RNTI is the first P-RNTI, in which case the PEI is the first type of PEI. For another example, the P-RNTI is the second P-RNTI, in which case the PEI is the second type of PEI.

In an embodiment, the common search space of the first type of PEI is a first common search space, and the common search space of the second type of PEI is a second common search space, in which case the terminal may obtain the first type of PEI and the second type of PEI in different common search spaces.

In an embodiment, the Coreset of the first type of PEI is a first Coreset, and the Coreset of the second type is a second Coreset, in which case the terminal may determine the first type of PEI and the second type of PEI based on different Coresets. For example, the Coreset is the first Coreset, in which case the PEI is the first type of PEI. For another example, the Coreset is the second Coreset, in which case the PEI is the second type of PEI.

In an embodiment, the format of DCI carrying the first type of PEI is a first DCI format, and the format of DCI carrying the second type of PEI is a second DCI format, in which case, the terminal determines the first type of PEI and the second type of PEI according to the format of the DCI after receiving the DCI carrying the PEI. Formats of different DCIs may be determined according to whether the DCI carries the predetermined information field or not. In an embodiment, in a case that the DCI carries the predetermined information field, the format of the DCI is determined as the first DCI format, or, in a case that the DCI does not carry the predetermined information field, the format of the DCI is determined as the second DCI format.

In an embodiment, the first type of PEI and the second type of PEI are multiplexed. The first type of PEI and the second type of PEI may be carried by a same DCI. For example, the first type of PEI and the second type of PEI are carried by the same DCI.

In an embodiment, the DCI includes a predetermined information field. The predetermined information field includes a first subfield and/or a second subfield. The first subfield indicates information of the first type of PEI. The second subfield indicates information of the second type of PEI.

In an embodiment, the predetermined information field includes the first subfield and the second subfield. The terminal may determine that the PEI received includes the first type of PEI and the second type of PEI according to the predetermined information field after receiving the DCI. The terminal selects one PEI to perform the paging operation from the first type of PEI and the second type of PEI. It needs to be noted that, after the terminal receives two different types of PEIs, which type of PEI the terminal adopts to perform the paging operation may be determined according to a terminal strategy, or may be specified according to a predetermined protocol, or may be a default configuration, which is not limited here. In an embodiment, the predetermined information field includes the first subfield and does not include the second subfield. After receiving the DCI, the terminal may determine that the PEI received does not indicate paging sub-group information according to the predetermined information field, that is, the PEI received is the first type of PEI. The terminal may perform the paging operation based on the first type of PEI.

In an embodiment, the predetermined information field includes the second subfield and does not include the first subfield. After receiving the DCI, the terminal may determine that the PEI received indicates the paging sub-group information according to the predetermined information field, that is, the PEI received is the second type of PEI. The terminal may perform the paging operation based on the second type of PEI. In an embodiment, the terminal supporting the second type of PEI may perform the paging operation based on the second type of PEI.

In an embodiment, the DCI includes the predetermined information field. A value of the predetermined information field is configured to indicate that a PEI carried by the DCI is the first type of PEI, or, a PEI carried by the DCI is the second type of PEI.

In an embodiment, the value of the predetermined information field is a first value. The PEI carried by the DCI is the first type of PEI. The terminal may determine that the PEI received is the first type of PEI after receiving the DCI with the value of the predetermined information field being the first value. The terminal may perform the paging operation based on the first type of PEI. The first value may be a value range.

In an embodiment, the value of the predetermined information field is a second value. The PEI carried by the DCI is the second type of PEI. The terminal may determine that the PEI received is the second type of PEI after receiving the DCI with the value of the predetermined information field being the second value. The terminal may perform the paging operation based on the second type of PEI. The second value may be a value range.

In an embodiment, the predetermined information field may indicate the first type of PEI by an additionally reserved bit. That is, several bits are additionally reserved as the predetermined information field on the basis of the predetermined information field indicating the first type of PEI. For example, 3 bits are reserved. When the value is "000", the bits indicate that the first type of PEI information is carried.

As illustrated in FIG. 4, a method for group paging is provided in the disclosure. The method is performed by a base station, and includes a following step.

At step 41, a system message is sent. The system message is at least configured to indicate that the PEI is the first type of PEI or the second type of PEI.

In an embodiment, the base station sends the system message. The system message indicates that the PEI is the first type of PEI. The terminal determines that the PEI sent by the base station is the first type of PEI according to an indication of the system message after receiving the system message. The base station sends the PEI to the terminal. The terminal determines that the PEI is the first type of PEI after receiving the PEI. The terminal supporting the second type of PEI and the terminal not supporting the second type of PEI may perform the paging operation based on the first type of PEI.

In an embodiment, the base station sends the system message. The system message indicates that the PEI is the second type of PEI. The terminal determines that the PEI sent by the base station is the second type of PEI according to the indication of the system message after receiving the system message. The base station sends the PEI to the terminal. The terminal determines that the PEI is the second type of PEI after receiving the PEI. The terminal supporting the second type of PEI may perform the paging operation based on the second type of PEI. As an embodiment, it may be considered that the terminal supporting the second type of PEI may monitor the first type of PEI.

It needs to be noted that, those skilled in the art may understand that, the method provided in embodiments of the disclosure may be executed independently, or may be executed in combination with some methods in embodiments of the disclosure or some methods in the related art.

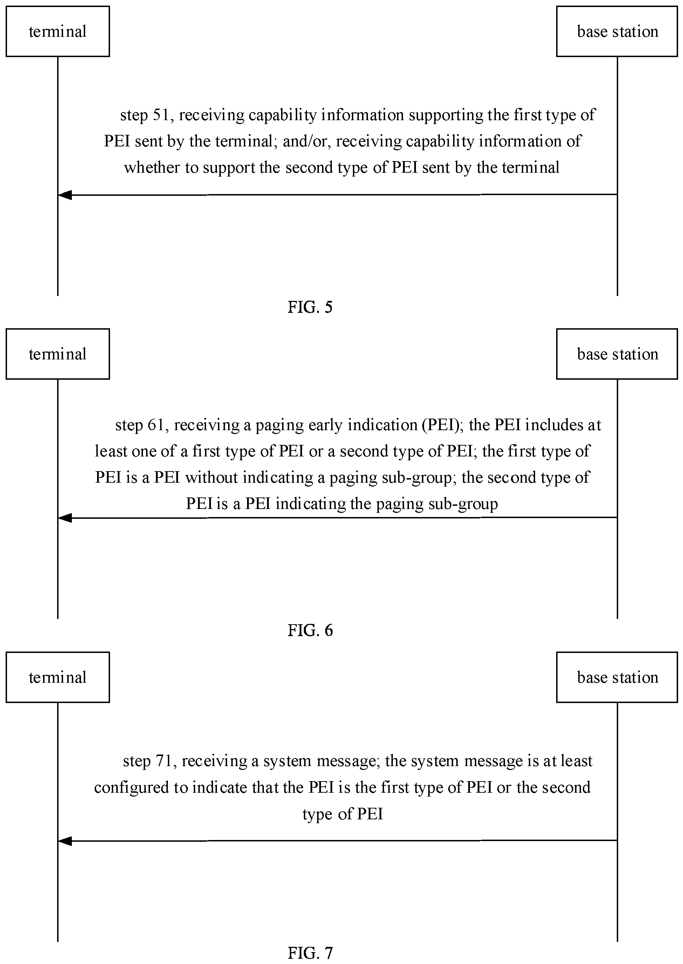

As illustrated in FIG. 5, a method for group paging is provided in the disclosure. The method is performed by a base station, and includes a following step.

At step 51, capability information supporting the first type of PEI sent by the terminal is received;
and/or,
capability information of whether to support the second type of PEI sent by the terminal is received.

In an embodiment, the base station receives the capability information supporting the first type of PEI sent by the terminal. The base station sends the first type of PEI to the terminal.

In an embodiment, the base station receives the capability information supporting the second type of PEI sent by the terminal. The base station sends the second type of PEI to the terminal. In an embodiment, the base station receives the capability information supporting the second type of PEI sent by the terminal. The base station sends the first type of PEI and the second type of PEI to the terminal. It needs to be noted that, after the terminal receives two different types of PEIs, which type of PEI the terminal adopts to perform the paging operation may be determined according to a terminal strategy, or may be specified according to a predetermined protocol, or may be a default configuration, which is not limited here.

In an embodiment, the base station receives the capability information supporting the second type of PEI sent by the terminal after receiving the capability information supporting the first type of PEI sent by the terminal. The base station sends the second type of PEI to the terminal. In an embodiment, the base station receives the capability information supporting the second type of PEI sent by the terminal after receiving the capability information supporting the first type of PEI sent by the terminal. The base station sends the first type of PEI and the second type of PEI to the terminal. It needs to be noted that, after the terminal receives two different types of PEIs, which type of PEI the terminal adopts to perform the paging operation may be determined according to the terminal strategy, or may be specified according to the predetermined protocol, or may be the default configuration, which is not limited here. In an embodiment, the terminal not supporting the second type of PEI may monitor the second type of PEI, that is, a specific value of a paging sub-group is ignored, that is, any one paging sub-group may wake up itself.

It needs to be noted that, those skilled in the art may understand that, the method provided in embodiments of the disclosure may be executed independently, or may be executed in combination with some methods in embodiments of the disclosure or some methods in the related art.

As illustrated in FIG. 6, a method for group paging is provided in the embodiment. The method is performed by a terminal, and includes following steps.

At step 61, a paging early indication (PEI) is received.

The PEI includes at least one of a first type of PEI or a second type of PEI. The first type of PEI is a PEI without indicating a paging sub-group. The second type of PEI is a PEI indicating the paging sub-group.

The terminal may be but is not limited to a mobile phone, a wearable device, a vehicle terminal, a road side unit (RSU), a smart home terminal, an industrial sensing device and/or a medical device, etc. In an application scenario, the terminal may be a terminal supporting the second type of PEI, and the terminal supporting the second type of PEI may be capable of identifying the second type of PEI and/or performing the paging operation based on the second type of PEI after receiving the PEI. In an application scenario, the terminal may be a terminal not supporting the second type of PEI. The terminal not supporting the second type of PEI may be incapable of identifying the second type of PEI and/or performing the paging operation based on the second type of PEI after receiving the PEI. In some application scenarios, in a terminal accessed in a network, part of terminals are terminals supporting the second type of PEI, and another part of terminals are terminals without supporting the second type of PEI, which is not limited herein. It needs to be noted that, in response to the terminal supporting the second type of PEI, the terminal supports the first type of PEI. A scenario of whether the terminal supports the first type of PEI is similar to the above scenario. It needs to be noted that, the terminal may not support the first type of PEI and the second type of PEI simultaneously.

The base station involved in the present disclosure may be an access device where the terminal accesses the network. The base station may be various types of base stations such as a 3G network base station, a 4G network base station, a 5G network base station or other evolutionary base station. The base station may configure different types of PEIs according to capability information of a PEI supported by the terminal.

In an embodiment, the group paging may include dividing terminals into different groups. The network pages all terminals in one group by sending one group paging message, without necessarily sending the paging message independently for each terminal. The terminal determines whether the terminal itself belongs to a paged group after receiving the group paging message, and if so, the terminal responses to the group paging message, and if not, the terminal ignores the group paging message.

In an embodiment, there may be a plurality of groups for the group paging. Different groups may be configured with different paging resources. A terminal may belong to a certain group in the plurality of groups. In response to determining the paging group to which the terminal belongs, the terminal may monitor the paging message on a paging resource indicated by the paging group. Which group the terminal belongs to may be determined by the base station or a certain core network device in the core network. It needs to be noted that, a predetermined group may be divided into a plurality of paging sub-groups. The group may refer to a paging sub-group, which is not limited here.

In an embodiment, there may be a plurality of paging sub-groups for the group paging. A terminal included in the paging sub-group may be determined according to a probability of the terminal being paged and a paging class to which the terminal belongs. In an embodiment, the terminal may determine a paging sub-group to which the terminal belongs according to the probability of the terminal being paged. In an embodiment, in response to the probability of the terminal being paged being less than a probability threshold, it is determined that the terminal belongs to a first paging sub-group, or in response to the probability of the terminal being paged being greater than the probability threshold, it is determined that the terminal belongs to a second paging sub-group. A paging resource configured by the first paging sub-group may be different from a paging resource configured by the second paging sub-group. It needs to be noted that, the paging resource configured by the first paging sub-group may be same as the paging resource configured by the second paging sub-group.

In embodiments of the disclosure, the terminal may receive two different types of PEIs sent by the base station. The PEI is configured for the terminal to execute the paging operation. The PEI indicating the paging sub-group may be a PEI carrying paging sub-group information.

It needs to be noted that, the terminal may report capability information of the PEI supported by the terminal. The base station may determine which type of PEI is sent to the terminal. For example, the capability information indicates that the terminal only supports the first type of PEI, in which case the base station may send the first type of PEI. Alternatively, the capability information indicates that the terminal supports the first type of PEI and the second type of PEI, in which case the base station may send the first type of PEI or the base station may send the second type of PEI. Alternatively, the capability information indicates that the terminal supports the first type of PEI and the second type of PEI, in which case the base station sends the first type of PEI and the second type of PEI. Which type of PEI is used may be determined by the terminal according to the terminal strategy and/or the terminal capability after the terminal receives the first type of PEI and the second type of PEI. For example, the terminal preferentially uses the second type of PEI according to the terminal strategy, which is not limited here.

In an embodiment, the terminal reports capability information. The capability information indicates that the terminal supports the first type of PEI. The base station sends the PEI according to the capability information. The PEI includes the first type of PEI. The first type of PEI is a PEI without indicating a paging sub-group. The terminal performs the paging operation based on the first type of PEI after receiving the first type of PEI. Performing the paging operation may be determining whether it is required to response to the paging message sent by the base station.

In an embodiment, the terminal reports capability information. The capability information indicates that the terminal supports the second type of PEI. The base station sends the PEI according to the capability information. The PEI includes the second type of PEI. The second type of PEI is a PEI indicating the paging sub-group. The terminal performs the paging operation based on the second type of PEI after receiving the second type of PEI. Performing the paging operation may be determining whether it is required to response to the paging message sent by the base station.

In an embodiment, the terminal reports capability information. The capability information indicates that the terminal supports the second type of PEI. The base station sends the PEI according to the capability information. The PEI includes the first type of PEI. The first type of PEI is the PEI without indicating the paging sub-group. The terminal performs the paging operation based on the first type of PEI after receiving the first type of PEI. Performing the paging operation may be determining whether it is required to response to the paging message sent by the base station. It needs to be noted that, in response to the terminal supporting the second type of PEI, the terminal may monitor the first type of PEI.

In an embodiment, the terminal reports capability information. The capability information indicates that the terminal supports the second type of PEI. The base station sends the PEI according to the capability information. The PEI includes the first type of PEI and the second type of PEI. The first type of PEI is the PEI without indicating the paging sub-group. The second type of PEI is the PEI indicating the paging sub-group. The terminal performs the paging operation based on the first type of PEI or the second type of PEI after receiving the first type of PEI and the second type of PEI. Performing the paging operation may be determining whether it is required to response to the paging message sent by the base station. It needs to be noted that, after the terminal receives two different types of PEIs, which type of PEI the terminal adopts to perform the paging operation may be determined according to a terminal strategy, or may be specified according to a predetermined protocol, or may be a default configuration, which is not limited here.

The paging sub-group may be indicated by information carrying the paging sub-group. It needs to be noted that, types of PEIs involved in the disclosure may be distinguished and indicated by means of an explicit indication or an implicit indication. Indicating by means of the explicit indication may be that the PEI may be directly indicated by a set dedicated information field indication. For example, an information field includes 1 bit. When the information field is set to "0", it indicates that the PEI is the first type of PEI. When the information field is set to "1", it indicates that PEI is the second type of PEI. Indicating by means of the implicit indication may be that the PEI is indicated by different types of paging-radio network temporary identifiers (P-RNTIs), common search spaces, control resource sets (Coresets) and formats of DCIs that send the PEI, without configuring the dedicated information field. For example, in a case that the PEI is scrambled with a first P-RNTI, the PEI is indicated as the first type of PEI, and in a case that the PEI is scrambled with a second P-RNTI, the PEI is indicated as the second type of PEI. In an embodiment, the first type of PEI and the second type of PEI may not be multiplexed in a carrying manner. For example, the first type of PEI and the second type of PEI may be carried by different DCIs. The first type of PEI is carried by the first DCI. The second type of PEI is carried by the second DCI.

In an embodiment, the first type of PEI and the second type of PEI may be multiplexed in a carrying manner. For example, the first type of PEI and the second type of PEI may be carried by a same DCI. In an embodiment, the first type of PEI and the second type of PEI may not be multiplexed in a carrying manner. For example, the first type of PEI and the second type of PEI may be carried by different DCIs. The first type of PEI is carried by the first DCI. The second type of PEI is carried by the second DCI.

It needs to be noted that, those skilled in the art may understand that, the method provided in embodiments of the disclosure may be executed independently, or may be executed in combination with some methods in embodiments of the disclosure or some methods in the related art.

In an embodiment, the first type of PEI and the second type of PEI are not multiplexed. The first type of PEI and the second type of PEI may be carried by different DCIs. For example, the first type of PEI is carried by the first DCI. The second type of PEI is carried by the second DCI.

In an embodiment, a paging-radio network temporary identifier (P-RNTI) of the first type of PEI is different from a P-RNTI of the second type of PEI;
and/or,
a common search space of the first type of PEI is different from a common search space of the second type of PEI;
   and/or,
a control resource set (Coreset) of the first type of PEI is different from a Coreset of the second type of PEI;
   and/or,
a format of DCI of the first type of PEI is different from a format of DCI of the second type of PEI.

In an embodiment, the first type of PEI is scrambled with a first P-RNTI, and the second type of PEI is scrambled with a second P-RNTI. The terminal may determine whether the PEI is the first type of PEI or the second type of PEI according to the scrambled P-RNTI after receiving the PEI. For example, the P-RNTI is the first P-RNTI, in which case the PEI is the first type of PEI. For another example, the P-RNTI is the second P-RNTI, in which case the PEI is the second type of PEI.

In an embodiment, the common search space of the first type of PEI is a first common search space, and the common search space of the second type of PEI is a second common search space, in which case the terminal may obtain the first type of PEI and the second type of PEI in different common search spaces.

In an embodiment, the Coreset of the first type of PEI is a first Coreset, and the Coreset of the second type is a second Coreset, in which case the terminal may determine the first type of PEI and the second type of PEI based on different Coresets. For example, the Coreset is the first Coreset, in which case the PEI is the first type of PEI. For another example, the Coreset is the second Coreset, in which case the PEI is the second type of PEI.

In an embodiment, the format of DCI carrying the first type of PEI is a first DCI format, and the format of DCI carrying the second type of PEI is a second DCI format, in which case, the terminal determines the first type of PEI and the second type of PEI according to the format of the DCI after receiving the DCI carrying the PEI. Formats of different DCIs may be determined according to whether the DCI carries the predetermined information field or not. In an embodiment, in a case that the DCI carries the predetermined information field, the format of the DCI is determined as the first DCI format, or, in a case that the DCI does not carry the predetermined information field, the format of the DCI is determined as the second DCI format.

In an embodiment, the first type of PEI and the second type of PEI are multiplexed. The first type of PEI and the second type of PEI may be carried by a same DCI. For example, the first type of PEI and the second type of PEI are carried by the same DCI.

In an embodiment, the DCI includes a predetermined information field. The predetermined information field includes a first subfield and/or a second subfield. The first subfield indicates information of the first type of PEI. The second subfield indicates information of the second type of PEI.

In an embodiment, the predetermined information field includes the first subfield and the second subfield. The terminal may determine that the PEI received includes the first type of PEI and the second type of PEI according to the predetermined information field after receiving the DCI. The terminal selects one PEI to perform the paging operation from the first type of PEI and the second type of PEI. It needs to be noted that, after the terminal receives two different types of PEIs, which type of PEI the terminal adopts to perform the paging operation may be determined according to a terminal strategy, or may be specified according to a predetermined protocol, or may be a default configuration, which is not limited here. In an embodiment, the predetermined information field includes the first subfield and does not include the second subfield. After receiving the DCI, the terminal may determine that the PEI received does not indicate paging sub-group information according to the predetermined information field, that is, the PEI received is the first type of PEI. The terminal may perform the paging operation based on the first type of PEI.

In an embodiment, the predetermined information field includes the second subfield and does not include the first subfield. After receiving the DCI, the terminal may determine that the PEI received indicates the paging sub-group information according to the predetermined information field, that is, the PEI received is the second type of PEI. The terminal may perform the paging operation based on the second type of PEI. In an embodiment, the terminal supporting the second type of PEI may perform the paging operation based on the second type of PEI.

In an embodiment, the DCI includes a predetermined information field. A value of the predetermined information field is configured to indicate that a PEI carried by the DCI is the first type of PEI, or, a PEI carried by the DCI is the second type of PEI.

In an embodiment, the value of the predetermined information field is a first value. The PEI carried by the DCI is the first type of PEI. The terminal may determine that the PEI received is the first type of PEI after receiving the value of the predetermined information field is the first value. The terminal may perform the paging operation based on the first type of PEI. The first value may be a value range.

In an embodiment, the value of the predetermined information field is a second value. The PEI carried by the DCI is the second type of PEI. The terminal may determine that the PEI received is the second type of PEI after receiving the value of the predetermined information field is the second value. The terminal may perform the paging operation based on the second type of PEI. The second value may be a value range.

In an embodiment, the predetermined information field may indicate the first type of PEI by an additionally reserved bit. That is, several bits are additionally reserved as the predetermined information field on the basis of the predetermined information field indicating the first type of PEI. For example, 3 bits are reserved. When the value is all "0", the bits indicate information of the first type of PEI is carried.

As illustrated in FIG. 7, a method for group paging is provided in the embodiment. The method is performed by a terminal, and includes a following step.

At step 71, a system message is received. The system message is at least configured to indicate that the PEI is the first type of PEI or the second type of PEI.

In an embodiment, the base station sends a system message. The system message indicates that the PEI is the first type of PEI. The terminal determines that the PEI sent by the base station is the first type of PEI according to an indication of the system message after receiving the system message. The base station sends the PEI to the terminal. The terminal determines that the PEI is the first type of PEI after receiving the PEI. The terminal supporting the second type of PEI and the terminal not supporting the second type of PEI may perform the paging operation based on the first type of PEI.

In an embodiment, the base station sends the system message. The system message indicates that the PEI is the second type of PEI. The terminal determines that the PEI sent by the base station is the second type of PEI according to the indication of the system message after receiving the system message. The base station sends the PEI to the terminal. The terminal determines that the PEI is the second type of PEI after receiving the PEI. The terminal supporting the second type of PEI may perform the paging operation based on the first type of PEI.

It needs to be noted that, those skilled in the art may understand that, the method provided in embodiments of the disclosure may be executed independently, or may be executed in combination with some methods in embodiments of the disclosure or some methods in the related art.

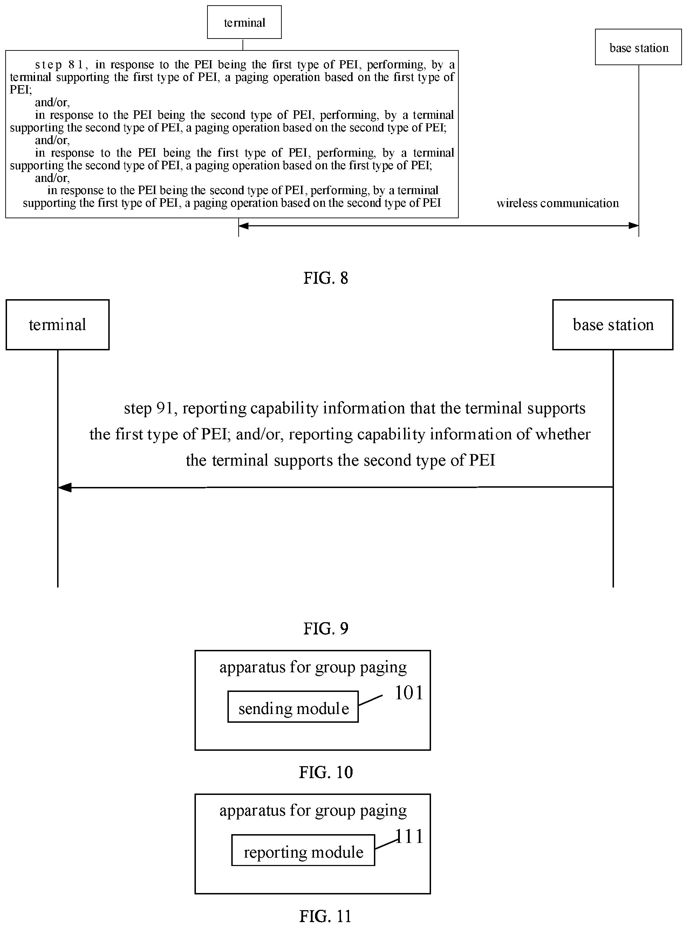

As illustrated in FIG. 8, a method for group paging is provided in the embodiment. The method is performed by a terminal, and includes following steps.

At step 81, in response to the PEI being the first type of PEI, a terminal supporting the first type of PEI performs a paging operation based on the first type of PEI;
and/or,
in response to the PEI being the second type of PEI, a terminal supporting the second type of PEI performs a paging operation based on the second type of PEI;
   and/or,
in response to the PEI being the first type of PEI, a terminal supporting the second type of PEI performs a paging operation based on the first type of PEI;
   and/or,
in response to the PEI being the second type of PEI, a terminal supporting the first type of PEI performs a paging operation based on the second type of PEI.

In an embodiment, the terminal reports capability information. The capability information indicates that the terminal supports the first type of PEI. The base station sends the PEI according to the capability information. The PEI includes the first type of PEI. The first type of PEI is a PEI without indicating a paging sub-group. The terminal supporting the first type of PEI performs the paging operation based on the first type of PEI after receiving the first type of PEI. Performing the paging operation may be determining whether it is required to response to the paging message sent by the base station.

In an embodiment, the terminal reports capability information. The capability information indicates that the terminal supports the second type of PEI. The base station sends the PEI according to the capability information. The PEI includes the second type of PEI. The second type of PEI is a PEI indicating the paging sub-group. The terminal supporting the second type of PEI performs the paging operation based on the second type of PEI after receiving the second type of PEI. Performing the paging operation may be determining whether it is required to response to the paging message sent by the base station.

In an embodiment, the terminal reports capability information. The capability information indicates that the terminal supports the second type of PEI. The base station sends the PEI according to the capability information. The PEI includes the first type of PEI. The first type of PEI is the PEI without indicating the paging sub-group. The terminal supporting the second type of PEI performs the paging operation based on the first type of PEI after receiving the first type of PEI. Performing the paging operation may be determined whether it is required to response to the paging message sent by the base station. It needs to be noted that, in response to the terminal supporting the second type of PEI, the terminal supports the first type of PEI.

In an embodiment, the terminal reports capability information, and the capability information indicates that the terminal supports the first type of PEI. The base station sends the PEI according to the capability information. The PEI includes the first type of PEI and the second type of PEI. The first type of PEI is the PEI without indicating the paging sub-group. The second type of PEI is the PEI indicating the paging sub-group. The terminal supporting the first type of PEI performs the paging operation based on the first type of PEI or the second type of PEI after receiving the first type of PEI and the second type of PEI.

In an embodiment, the terminal reports capability information. The capability information indicates that the terminal supports the second type of PEI. The base station sends the PEI according to the capability information. The PEI includes the first type of PEI and the second type of PEI. The first type of PEI is the PEI without indicating the paging sub-group. The second type of PEI is the PEI indicating the paging sub-group. The terminal supporting the second type of PEI performs the paging operation based on the first type of PEI or the second type of PEI after receiving the first type of PEI and the second type of PEI. Performing the paging operation may be determining whether it is required to response to the paging message sent by the base station. It needs to be noted that, after the terminal receives two different types of PEIs, which type of PEI the terminal adopts to perform the paging operation may be determined according to a terminal strategy, or may be specified according to a predetermined protocol, or may be a default configuration, which is not limited here.

It needs to be noted that, those skilled in the art may understand that, the method provided in embodiments of the disclosure may be executed independently, or may be executed in combination with some methods in embodiments of the disclosure or some methods in the related art.

As illustrated in FIG. 9, a method for group paging is provided in the embodiment. The method is performed by a terminal, and includes a following step.

At step 91, capability information that the terminal supports the first type of PEI is reported;
and/or,
capability information of whether the terminal supports the second type of PEI is reported.

In an embodiment, the terminal reports the capability information supporting the first type of PEI. The base station sends the first type of PEI to the terminal.

In an embodiment, the terminal reports the capability information supporting the second type of PEI. The base station sends the second type of PEI to the terminal. In an embodiment, the base station receives the capability information supporting the second type of PEI by the terminal. The base station sends the first type of PEI and the second type of PEI to the terminal. It needs to be noted that, after the terminal receives two different types of PEIs, which type of PEI the terminal adopts to perform the paging operation after two different types of PEIs are received may be determined according to a terminal strategy, or may be specified according to the predetermined protocol, or may be the default configuration, which is not limited here.

In an embodiment, the terminal reports the capability information supporting the second type of PEI after the terminal reports the capability information supporting the first type of PEI. The base station sends the second type of PEI to the terminal. In an embodiment, the terminal reports the capability information supporting the second type of PEI after the terminal reports the capability information supporting the first type of PEI. The base station sends the first type of PEI and the second type of PEI to the terminal. It needs to be noted that, after the terminal receives two different types of PEIs, which type of PEI the terminal adopts to perform the paging operation may be determined according to the terminal strategy, or may be specified according to the predetermined protocol, or may be the default configuration, which is not limited here. In an embodiment, the terminal not supporting the second type of PEI may monitor the second type of PEI, that is, a specific value of a paging sub-group is ignored, that is, any one paging sub-group may wake up itself.

It needs to be noted that, those skilled in the art may understand that, the method provided in embodiments of the disclosure may be executed independently, or may be executed in combination with some methods in embodiments of the disclosure or some methods in the related art.

In order to understand embodiments of the disclosure, the technical solution of the disclosure is further illustrated by one example embodiment.

### Example 1:

A method for group paging is provided in an embodiment.

A scenario at a base station side may be that the base station configures a first type of PEI for a terminal.

In an embodiment, the first type of PEI and a second type of PEI may not be multiplexed. The multiplexing situations may include following situations.

The first type of PEI may be scrambled with a PRNTI different from a PRNTI of the second type of PEI.

The first type of PEI may use a common search space different from a common search space of the second type of PEI.

The first type of PEI may use a Coreset different from a Coreset of the second type of PEI.

The first type of PEI may use a format of DCI different from a format of DCI of the second type of PEI.

In an embodiment,
the DCI does not carry predetermined information, that is, the information carried is null, which indicates that the DCI carries the first type of PEI. In an embodiment, the predetermined information is an information field indicating a paging sub-group, and not carrying the information means indicating the first type of PEI in the DCI.

One information bit is carried in the DCI. In a case that a value of the bit is a predetermined value, for example, 1, it indicates that the DCI carries the first type of PEI. For convenience of understanding, it may be considered that the DCI does not carry an information field indicating the paging sub-group, that is, only one bit is used, and a value of the bit is a predetermined value, in which case it indicates that the DCI carries the first type of PEI.

It needs to be noted that, the base station may configure the first type of PEI and the second type of PEI, respectively, to indicate support situations of the first type of PEI and the second type of PEI respectively. The base station may only configure the second type of PEI to implicitly indicate that the above two PEIs are supported. The base station may not support the above two PEIs, that is, does not configure the above two PEIs regardless of which type of PEI.

In an embodiment, the first type of PEI and the second type of PEI are multiplexed.

In an embodiment, the first type of PEI and the second type of PEI are carried by same downlink control information (DCI), that is, different parameters, for example, PRNTIs, are defined without necessarily for different types of PEIs.

In an embodiment, the DCI may carry two types of PEI wakeup information simultaneously.

For example,
the DCI carries a reserved bit or a code point for carrying information of the first type of PEI.

As an embodiment, a value of one bit or code point is reserved for the first type of PEI:
when the reserved bit is 0, it indicates that the terminal supporting the capability of the PEI is not awakened;
when the reserved bit is 1, it indicates that the terminal supporting the capability of the PEI is awakened;
when a value of code points is "xxx", it indicates that the terminal supporting the capability of the PEI is not awakened;
when the value of code points is "yyy", it indicates that the terminal supporting a capability of the PEI is awakened.

In an embodiment, one identifier in the DCI format indicates whether the PEI is the first type of PEI or the second type of PEI (both cannot coexist in this manner).

In an embodiment, a system message specifies whether a type of the PEI format is the first type of PEI or the second type of PEI in advance.

In an embodiment, the DCI format does not carry any second type of PEI information, i.e. a predetermined bit of the second type of PEI for indicating the paging sub-group does not exist, in which case the PEI is taken as one first type of PEI.

It needs to be noted that, in a case that the base station broadcasts two types of PEIs, the base station may support the two types of PEIs. In a case that the base station broadcasts the second type of PEI, the base station may support the two types of PEIs. Of course, in a case that the base station only broadcasts one type of PEI, the base station may only support a corresponding type of PEI.

In an embodiment, a scenario at a terminal side may include followings.

In an embodiment, the terminal reports a capability supporting the first type of PEI or a capability supporting the second type of PEI. The terminal may report the capability whether to support the second type of PEI after reporting the capability supporting the first type of PEI. The reporting of the first type of PEI depends on reporting of the second type of PEI.

In an embodiment, the terminal reports a capability supporting the second type of PEI, that is, the capability supporting the first type of PEI by default. In this case, the base station implicitly determines that the terminal is a terminal supporting two types of PEIs.

In an embodiment, in a case that the base station only broadcasts the first type of PEI, the terminal reporting the capability supporting the second type of PEI or the terminal reporting the capability supporting the first type of PEI may use the first type of PEI.

In an embodiment, it may be deemed that the terminal supporting the second type of PEI is a more advanced terminal, and may support the first type of PEI simultaneously.

In an embodiment, when the base station only broadcasts the second type of PEI:
in an embodiment, the terminal reporting the capability of supporting the second type of PEI may be used;
in an embodiment, the terminal reporting the capability of only supporting the first type of PEI may be used.

The DCI includes information about awakened subgroups. For a terminal not supporting the sub-group, information of any one sub-group may wake up the terminal.

It needs to be noted that, those skilled in the art may understand that, the method provided in embodiments of the disclosure may be executed independently, or may be executed in combination with some methods in embodiments of the disclosure or some methods in the related art.

As illustrated in FIG. 10, an apparatus for group paging is provided according to embodiments of the present disclosure, and includes a sending module 101.

The sending module 101 is configured to send a paging early indication (PEI).

The PEI includes at least one of a first type of PEI or a second type of PEI. The first type of PEI is a PEI without indicating a paging sub-group. The second type of PEI is a PEI indicating the paging sub-group.

It needs to be noted that, those skilled in the art may understand that, the method provided in embodiments of the disclosure may be executed independently, or may be executed in combination with some methods in embodiments of the disclosure or some methods in the related art.

As illustrated in FIG. 11, an apparatus for group paging is provided according to embodiments of the present disclosure, and includes a receiving module 111.

The receiving module 111 is configured to receive a paging early indication (PEI).

The PEI includes at least one of a first type of PEI or a second type of PEI. The first type of PEI is a PEI without indicating the paging sub-group. The second type of PEI is a PEI indicating the paging sub-group.

It needs to be noted that, those skilled in the art may understand that, the method provided in embodiments of the disclosure may be executed independently, or may be executed in combination with some methods in embodiments of the disclosure or some methods in the related art.

A communication device is provided according to embodiments of the disclosure, and includes:
a processor; and
a memory for storing processor executable instructions;
the processor is configured to: implement the method described in the above any embodiment when running the executable instructions.

The processor may include various types of storage mediums. The storage medium is a non-transitory computer storage medium, and may continue memorizing and storing information thereon when a communication device is powered off.

The processor is connected to a memory via a bus, and may be configured to read an executable program stored on the memory.

A computer storage medium storing a computer executable program is further provided according to embodiments of the present disclosure. When the executable program is executed by a processor, the method as described in the above any embodiment is implemented.

With regards to the apparatus in the above embodiments, the specific way in which each module performs the operation has been described in embodiments of the method and will not be elaborated here.

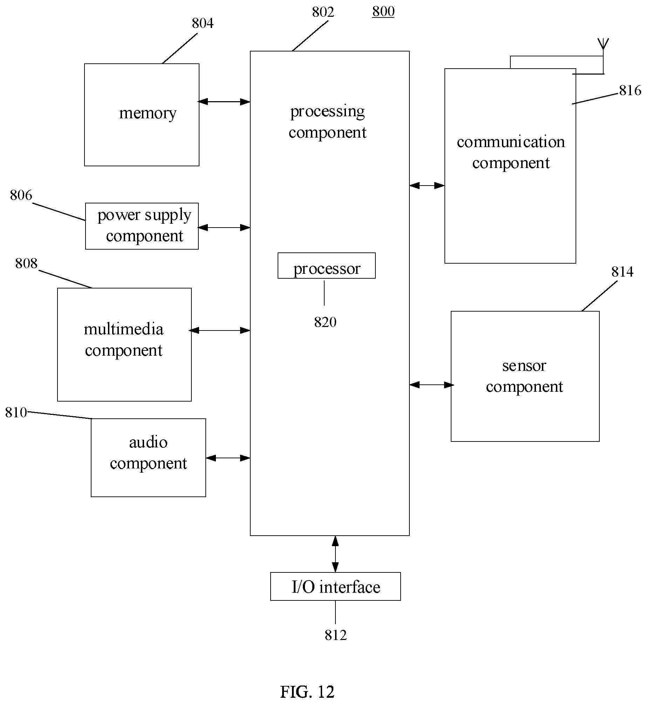

As illustrated in FIG. 12, a structure of a terminal is provided according to an embodiment of the disclosure.

As illustrated in FIG. 12, a terminal 800 is provided in the embodiment. The terminal may be a mobile phone, a computer, a digital broadcasting terminal, a messaging device, a game console, a tablet device, a medical device, a fitness equipment, a personal digital assistant, etc.

As illustrated in FIG. 12, the terminal 800 may include one or more components: a processing component 802, a memory 804, a power supply component 806, a multimedia component 808, an audio component 810, an input/output (I/O) interface 812, a sensor component 814, and a communication component 816.

The processing component 802 generally controls an entire operation of the terminal 800, such as operations related to display, phone call, data communication, camera operation and recording operation. The processing component 802 may include one or more processors 820 to perform instructions, to complete all or part of steps of the above method. In addition, the processing component 802 may include one or more modules for the convenience of interaction between the processing component 802 and other components. For example, the processing component 802 may include a multimedia module for the convenience of interaction between the multimedia component 808 and the processing component 802.

The memory 804 is configured to store all types of data to support the operation of the terminal 800. Examples of the data include the instructions of any applications or methods operated on the terminal 800, contact data, phone book data, messages, pictures, videos, etc. The memory 804 may be implemented by any type of volatile or non-volatile storage devices or their combination, such as a static random access memory (SRAM), an electrically erasable programmable read-only memory (EEPROM), an erasable programmable read-only (EPROM), a programmable read-only memory (PROM), a read-only memory (ROM), a magnetic memory, a flash memory, a magnetic disk or an optical disk.

The power supply component 806 may provide power supply for all units of the terminal 800. The power supply component 806 may include a power supply management system, one or more power supplies, and other units related to generating, managing and distributing power for the terminal 800.

The multimedia component 808 includes an output interface screen provided between the terminal 800 and the user. In some embodiments, a screen may include a liquid crystal display (LCD) and a touch panel (TP). When the screen includes a touch panel, the screen may be implemented as a touch screen to receive input signals from the user. The touch panel includes one or more touch sensors to sense touch, slide and gestures on the touch panel. The touch sensor may not only sense a boundary of a touch or slide action, but also detect a duration and pressure related to the touch or slide operation. In some embodiments, the multimedia component 808 includes a front camera and/or a rear camera. When the terminal 800 is in operation mode, such as shooting mode or video mode, the front camera or the rear camera may receive the external multimedia data. Every front camera and rear camera may be a fixed optical lens system or an optical lens system with focal length and optical zoom capacity.

The audio component 810 is configured as an output and/or input signal. For example, the audio component 810 includes a microphone (MIC). When the terminal 800 is in operation mode, such as call mode, record mode, and speech recognition mode, the microphone is configured to receive external audio signals. The audio signals received may be further stored in the memory 804 or sent via the communication components 816. In some embodiments, the audio component 810 further includes a speaker configured to output an audio signal.

The I/O interface 812 provides an interface for the processing component 802 and the peripheral interface module, and the peripheral interface module may be a keyboard, a click wheel, a button, etc. The buttons may include but not limited to a home button, a volume button, a start button and a lock button.

The sensor component 814 includes one or more sensors, configured to provide various aspects of status assessment for the terminal 800. For example, the sensor component 814 may detect the on/off state of the terminal 800 and the relative positioning of the component. For example, the component is the display and the keypad of the terminal 800, the sensor component 814 may also detect the location change of the terminal 800 or one component of the terminal 800, the presence or absence of contact between the user and the terminal 800, the orientation or acceleration/deceleration of the terminal 800, and the temperature change of the terminal 800. The sensor component 814 may include a proximity sensor, which is configured to detect presence of the objects nearby without any physical contact. The sensor component 814 may further include a light sensor such as a CMOS or CCD image sensor, which is configured to use in imaging applications. In some embodiments, the sensor components 814 may further include an acceleration transducer, a gyroscope sensor, a magnetic sensor, a pressure sensor or a temperature sensor.

The communication component 816 may be configured for the convenience of wired or wireless communication between the terminal 800 and other devices. The terminal 800 may access wireless networks based on a communication standard, such as WiFi, 2G or 3G, or their combination. In an exemplary embodiment, the communication component 816 receives broadcast signals or broadcast-related information from an external broadcast management system via a broadcast channel. In an example embodiment, the communication component 816 further includes a near field communication (NFC) module to facilitate short-range communication. For example, the NFC module may be implemented based on a radio frequency identification (RFID) technology, an infrared data association (IRDA) technology, an ultra-wideband (UWB) technology, Bluetooth^{™} (BT) technology and other technologies.

In an example embodiment, the terminal 800 may be implemented by one or more application specific integrated circuits(ASIC), digital signal processors (DSP), digital signal processing devices (DSPD), programmable logic devices (PLD), field programmable gate arrays (FPGA), controllers, microcontrollers, microprocessors or other electronics components, which is configured to perform the above method.

In an example embodiment, a non-transitory computer-readable storage medium including instructions is further provided, such as the memory 804 including instructions, and the instructions may be executed by the processor 820 of the terminal 800 to complete the above method. For example, the non-transitory computer readable storage medium may be a ROM, a random access memory (RAM), a CD-ROM, a magnetic tape, a floppy disk, an optical data storage device, etc.

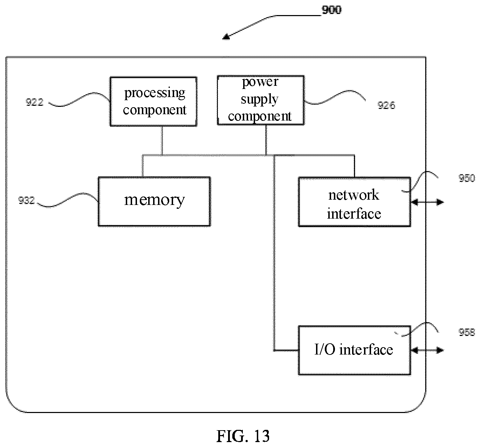

FIG. 13 illustrates a structure of a base station according to an embodiment of the disclosure. For example, a base station 900 may be provided as a network side server. As illustrated in FIG. 13, the base station 900 includes a processing component 922, which further includes one or more processors, and memory resources represented by a memory 932, which are configured to store instructions executable by the processing component 922, for example, an application. The application stored in the memory 932 may include one or more modules each of which corresponds to a set of instructions. In addition, the processing component 922 is configured to execute instructions, to perform any one method applied to the base station as described in the above method.

The base station 900 may further include one power supply component 926 configured to execute power management of the base station 900, one wired or wireless network interface 950 configured to connect the base station 900 to a network, and one input/output(I/O) interface 958. The base station 900 may operate an operating system stored in the memory 932, for example, Windows Server TM, Mac OS XTM, UnixTM, LinuxTM, FreeBSDTM or similar.

After considering the specification and practicing the disclosure herein, those skilled in the art will easily think of other implementations. The present disclosure is intended to cover any variations, usages, or adaptive changes of the present disclosure. These variations, usages, or adaptive changes follow the general principles of the present disclosure and include common knowledge or conventional technical means in the technical field not disclosed by the present disclosure. The description and the embodiments are to be regarded as exemplary only, and the true scope and spirit of the present disclosure are given by the appended claims.

It should be understood that the present invention is not limited to the precise structure described above and shown in the drawings, and various modifications and changes may be made without departing from its scope. The scope of the present application is only limited by the appended claims.

## Claims

1. A method for group paging, performed by a base station, comprising:
sending a paging early indication (PEI);
wherein the PEI comprises at least one of a first type of PEI or a second type of PEI, the first type of PEI is a PEI without indicating a paging sub-group, and the second type of PEI is a PEI indicating the paging sub-group.

2. The method according to claim 1, wherein the first type of PEI and the second type of PEI are not multiplexed.

3. The method according to claim 2, wherein the first type of PEI and the second type of PEI are carried by different downlink control information (DCI).

4. The method according to claim 2, wherein
a paging-radio network temporary identifier (P-RNTI) of the first type of PEI is different from a P-RNTI of the second type of PEI;
and/or,
a common search space of the first type of PEI is different from a common search space of the second type of PEI;
and/or,
a control resource set (Coreset) of the first type of PEI is different from a Coreset of the second type of PEI;
and/or,
a format of DCI of the first type of PEI is different from a format of DCI of the second type of PEI.

5. The method according to claim 1, wherein the first type of PEI and the second type of PEI are multiplexed.

6. The method according to claim 5, wherein the first type of PEI and the second type of PEI are carried by same downlink control information (DCI).

7. The method according to claim 6, wherein the DCI comprises a predetermined information field, the predetermined information field comprises a first subfield and/or a second subfield, the first subfield indicates information of the first type of PEI, and the second subfield indicates information of the second type of PEI.

8. The method according to claim 6, wherein the DCI comprises a predetermined information field, a value of the predetermined information field is configured to indicate that a PEI carried by the DCI is the first type of PEI, or, a PEI carried by the DCI is the second type of PEI.

9. The method according to claim 1, further comprising:
receiving a system message, wherein the system message is at least configured to indicate that the PEI is the first type of PEI or the second type of PEI.

10. The method according to claim 1, further comprising:
receiving capability information supporting the first type of PEI sent by the terminal;
and/or,
receiving capability information of whether to support the second type of PEI sent by the terminal.

11. A method for group paging, performed by a terminal, comprising:
receiving a paging early indication (PEI);
wherein the PEI comprises at least one of a first type of PEI or a second type of PEI, the first type of PEI is a PEI without indicating a paging sub-group, and the second type of PEI is a PEI indicating the paging sub-group.

12. The method according to claim 11, wherein the first type of PEI and the second type of PEI are not multiplexed.

13. The method according to claim 12, wherein the first type of PEI and the second type of PEI are carried by different downlink control information (DCI).

14. The method according to claim 12, wherein
a paging-radio network temporary identifier (P-RNTI) of the first type of PEI is different from a P-RNTI of the second type of PEI;
and/or,
a common search space of the first type of PEI is different from a common search space of the second type of PEI;
and/or,
a control resource set (Coreset) of the first type of PEI is different from a Coreset of the second type of PEI;
and/or,
a format of the first type of PEI is different from a format of the second type of PEI.

15. The method according to claim 11, wherein the first type of PEI and the second type of PEI are multiplexed.

16. The method according to claim 15, wherein the first type of PEI and the second type of PEI are carried by same downlink control information (DCI).

17. The method according to claim 16, wherein the DCI comprises a predetermined information field, the predetermined information field comprises a first subfield and/or a second subfield, the first subfield indicates information of the first type of PEI, and the second subfield indicates information of the second type of PEI.

18. The method according to claim 16, wherein the DCI comprises a predetermined information field, a value of the predetermined information field is configured to indicate that a PEI carried by the DCI is the first type of PEI, or, a PEI carried by the DCI is the second type of PEI.

19. The method according to claim 11, further comprising:
sending a system message, wherein the system message is at least configured to indicate that the PEI is the first type of PEI or the second type of PEI.

20. The method according to any one of claims 17 to 19, further comprising:
in response to the PEI being the first type of PEI, performing, by a terminal supporting the first type of PEI, a paging operation based on the first type of PEI;
and/or,
in response to the PEI being the second type of PEI, performing, by a terminal supporting the second type of PEI, a paging operation based on the second type of PEI;
and/or,
in response to the PEI being the first type of PEI, performing, by a terminal supporting the second type of PEI, a paging operation based on the first type of PEI;
and/or,
in response to the PEI being the second type of PEI, performing, by a terminal supporting the first type of PEI, a paging operation based on the second type of PEI.

21. The method according to claim 11, further comprising:
reporting capability information that the terminal supports the first type of PEI;
and/or,
reporting capability information of whether the terminal supports the second type of PEI.

22. An apparatus for group paging, comprising:
a sending module, configured to send a paging early indication (PEI),
wherein the PEI comprises at least one of a first type of PEI or a second type of PEI, the first type of PEI is a PEI without indicating a paging sub-group, and the second type of PEI is a PEI indicating the paging sub-group.

23. An apparatus for group paging, comprising:
a receiving module, configured to receive a paging early indication (PEI);
wherein the PEI comprises at least one of a first type of PEI or a second type of PEI, the first type of PEI is a PEI without indicating a paging sub-group, and the second type of PEI is a PEI indicating the paging sub-group.

24. A communication device, comprising:
a memory; and
a processor connected to the memory, configured to execute computer-executable instructions stored on the memory, and caused to implement the method according to any one of claims 1 to 10 or claims 11 to 21.

25. A computer storage medium storing computer executable instructions, wherein when the computer executable instructions are executed by a processor, the method according to any one of claims 1 to 10 or claims 11 to 21 is implemented.
